# EUROPEAN PATENT SPECIFICATION

(11) **EP 1 582 714 B1**
(45) Date of publication and mention of the grant of the patent: **27.09.2006**
(21) Application number: 05007108.3
(22) Date of filing: 31.03.2005
(51) Int. Cl.: F01N 9/00

(54) **Regeneration system and method for regenerating particulate filter**
System und Verfahren zur Regeneration eines Partikelfilters
Système et procédé pour la régénération d'un filtre à particules

(30) Priority: 31.03.2004 JP 2004104813
(43) Date of publication of application: 05.10.2005
(73) Proprietor: DENSO CORPORATION, Kariya-city, Aichi-pref., 448-8661 (JP)
(72) Inventor: Fukui, Yukiyo, Kariya-city, Aichi pref., 448-8661 (JP)
(74) Representative: TBK-Patent

(56) References cited:
- WO-A-02/086301

## Description

The present invention relates to regeneration system and method for regenerating a particulate filter, which collects fine exhaust particles (generally referred to as particulate matter) from an exhaust stream of a diesel engine.

With respect to an internal combustion engine, which is installed in a vehicle, there has been a strong demand for improving a clean level of emissions (exhaust gas) outputted from the engine. Particularly, in a case of a diesel engine, which uses light oil as its fuel, removal of the fine exhaust particles (the particulate matter), such as soot, contained in the exhaust gas is required in addition to removal of CO, HC and NOx from the exhaust gas. To meet such a demand, a particulate filter is arranged in an exhaust passage of the engine to collect the particulate matter from the exhaust gas.

The particulate filter has, for example, a porous ceramic body. In the particulate filter, when the exhaust gas passes through partition walls of the porous ceramic body, the particulate matter is captured by the partition walls and the pores of the porous ceramic body. When the amount of accumulated particulate matter becomes excessive, the performance of the particulate filter for capturing the particulate matter is disadvantageously lowered, or a flow resistance of the exhaust gas in the particulate filter is disadvantageously increased. When the flow resistance of the exhaust gas is increased, a back pressure of the internal combustion engine is increased to cause a decrease in an output power of the engine. To address such a disadvantage, there is provided a regenerating system for regenerating the particulate filter by appropriately removing the particulate matter, which is accumulated in the particulate filter.

For example, as recited in Japanese Unexamined Patent Publication No. 2004-1146, post fuel injection is performed to inject fuel during each expansion stroke (or each exhaust stroke) of the diesel engine and thereby to supply the fuel to the particulate filter. Through use of the combustion heat of the supplied fuel, the temperature of the particulate filter is increased, so that the accumulated particulate matter is combusted and is removed.

Basically, the regeneration operation of the regeneration system is performed in a running state of the diesel engine. More specifically, the regeneration system is operated when the vehicle is driven to travel by the diesel engine. This is true in the regeneration system recited in Japanese Unexamined Patent Publication No. 2004-1146. However, in some cases, a forceful regeneration operation for forcefully regenerating the particulate filter is performed at the time of maintenance service at an automobile dealer without requiring the traveling of the vehicle.

In the case of the forceful regeneration operation at the automobile dealer, the diesel engine is placed in the running state, and the post fuel injection is performed during each exhaust stroke. The forceful regeneration operation is performed in a manner similar to that of the regeneration operation, which is performed during the traveling of the vehicle. Thus, in some cases, the running state of the diesel engine is not suitable for regenerating the particulate filter, resulting in unnecessary waste of the fuel.

Further, WO 02/086301 Al discloses a regeneration system and method for regenerating a particulate filter having the features defined in the preambles of claims 1 and 10. A regeneration of the particulate filter is initiated when it is estimated that the accumulated particulate matter on the particulate filter has reached a predetermined constant amount. The regeneration operation is stopped when the elapsed time, which has been measured since the initiation of the regeneration operation, reaches a preset operating time period required for burning the accumulated particulate matter on the particulate filter.

It is an objective of the present invention to provide a regeneration system and method of a particulate filter, which minimize fuel consumption at a time of forceful regeneration of the particulate filter at, for example, an automobile dealer.

To achieve the objectives of the present invention, there is provided a regeneration system for performing a forceful regeneration operation of a particulate filter of a diesel engine installed in a vehicle. The regeneration system includes an estimating means, a setting means, a sensing means, a regenerating means and a stop means. The estimating means is for estimating an amount of accumulated particulate matter on the particulate filter before initiation of the regeneration operation. The estimating means provides at least one estimated value of the amount of accumulated particulate matter. The setting means is for setting a maximum operating time period of the regeneration operation based on the at least one estimated value of the amount of accumulated particulate matter. The sensing means is for sensing at least one physical quantity, which relates to the amount of accumulated particulate matter. The regenerating means is for regenerating the particulate filter in the regeneration operation by performing post fuel injection in the diesel engine during each exhaust stroke of the diesel engine to supply fuel to the particulate filter and thereby to remove the particulate matter from the particulate filter through use of combustion heat of the supplied fuel upon combustion of the supplied fuel. The stop means is for stopping the regeneration operation of the regenerating means when one of the following conditions is satisfied: a remaining amount of accumulated particulate matter of the particulate filter, which is monitored by the stop means and which is determined based on the at least one physical quantity sensed by the sensing means, is equal to or less than a reference value used to determine completion of regeneration of the particulate filter; and elapsed time, which has been measured since the initiation of the current regeneration operation of the regenerating means, reaches an end of the maximum operating time period. The stop means forcefully stops the regeneration operation of the regenerating means when the elapsed time reaches the end of the maximum operating time period regardless of the monitored remaining amount of accumulated particulate matter of the particulate filter.

In a case where the amount of particulate matter is obtained based on the physical quantity, which is sensed by the sensing means, when a measurement error of the sensing means is excessively large, an exact amount of accumulated particulate matter cannot be obtained. Thus, in such a situation, even after completion of the regeneration of the particulate filter, the running state of the diesel engine may be kept to cause waste of fuel.

Thus, according to the present invention, the amount of particulate matter is estimated before the initiation of the regeneration operation. Then, the maximum operating time period is set based on at least one estimated value of the amount of accumulated particulate matter. When the elapsed time, which has been measured since the initiation of the current regeneration operation of the regenerating means, reaches the end of the maximum operating time period, the regeneration operation is forcefully stopped. Thus, even when the measurement error of the sensing means is relatively large, it is possible to limit waste of the fuel.

The regeneration system of the present invention may further include a failure diagnosing means and a storage means. The failure diagnosing means is for diagnosing a failure of at least one of the estimating means, the setting means, the sensing means, the regenerating means and the stop means. The storage means is for storing failure information when the failure of any one of the at least one of the estimating means, the setting means, the sensing means, the regenerating means and the stop means is sensed by the failure diagnosing means. The failure information is indicative of the sensed failure. The stop means may stop the regeneration operation of the regenerating means when the failure information is present in the storage means. When one component of the regeneration system fails, the regeneration operation may not be properly performed. Thus, in such a situation, the regeneration operation is stopped to limit waste of the fuel.

In the above regeneration system, the at least one estimated value of the amount of accumulated particulate matter, which is estimated by the estimating means, may include a plurality of estimated values of the amount of accumulated particulate matter. The estimating means may estimate the plurality of estimated values of the amount of accumulated particulate matter through a plurality of methods, respectively. The setting means may set the maximum operating time period of the regeneration operation based on the plurality of estimated values of the amount of accumulated particulate matter. In this way, the maximum operating time period can be set to correspond with the more accurate amount of accumulated particulate matter. In the case where the maximum operating time period is determined based on the multiple estimated values of the amount of accumulated particulate matter, the maximum operating time period may be determined based on an average (weighted average) of the estimated values of the amount of accumulated particulate matter. Alternatively, the maximum operating time period may be determined based on a sum of a preset value and the average (weighted average) of the estimated values. Further alternatively, the maximum operating time period may be determined based on a maximum value of a group of the estimated values, which fall within a predetermined range.

However, in order to substantially remove the particulate matter from the particulate filter, the setting means may set the maximum operating time period of the regeneration operation based on a maximum one of the plurality of estimated values of the amount of accumulated particulate matter.

The plurality of estimated values of the amount of accumulated particulate matter, which are estimated by the estimating means, may include at least two of: an estimated value of the amount of accumulated particulate matter that is estimated by the estimating means based on a pressure difference between an inlet of the particulate filter and an outlet of the particulate filter; an estimated value of the amount of accumulated particulate matter that is estimated by the estimating means based on a weight of the particulate filter; an estimated value of the amount of accumulated particulate matter that is estimated by the estimating means based on elapsed operating time of the diesel engine, which has been measured since an end of a previous forceful regeneration operation of the particulate filter; an estimated value of the amount of accumulated particulate matter that is estimated by the estimating means based on a travel distance of the vehicle, which has been measured since the end of the previous regeneration operation of the particulate filter; and an estimated value of the amount of accumulated particulate matter that is estimated by the estimating means based on a total amount of injected fuel, which has been measured since the end of the previous regeneration operation of the particulate filter.

The regeneration system may include a rotational speed control means for controlling a rotational speed of the diesel engine. The rotational speed control means keeps the rotational speed of the diesel engine higher than a normal idling speed of the diesel engine throughout a predetermined time period, which starts at time of the initiation of the current regeneration operation. In this way, an increase rate of the temperature of the particulate filter is increased. Thus, the removal of the particulate matter (regeneration of the particulate filter) through the combustion of the supplied fuel, which is supplied by the post fuel injection, can be accelerated. This may result in a decrease in the fuel consumption.

The predetermined time period may end when combustion of the supplied fuel, which is supplied to the particulate filter, is confirmed. When the combustion of the supplied fuel is confirmed, it is assumed that the particulate filter has been heated to the predetermined temperature, which is required for the regeneration operation.

The rotational speed control means may reduce the rotational speed of the diesel engine to a minimum idling speed, which is required for maintaining the idling of the diesel engine, after elapse of the predetermined time period. During the regeneration operation, the diesel engine needs to be kept running to perform the post fuel injection. Thus, after the particulate filter is heated to the predetermined temperature, the rotational speed is maintained at the minimum rotational speed to minimize the fuel consumption.

The rotational speed control means may control the rotational speed of the diesel engine in such a manner that single fuel injection is performed in the diesel engine per combustion stroke of the diesel engine throughout the regeneration operation of the regenerating means.

In the diesel engine, multistage fuel injection operation (for example, including pilot fuel injection, pre-fuel injection, main fuel injection and after fuel injection) is often performed to increase the combustion temperature of the fuel to achieve appropriate combustion of the fuel. However, in order to reduce the fuel consumption, the multistage fuel injection operation should be prohibited, and the single fuel injection (e.g., the main fuel injection) may be performed during the combustion stroke.

Furthermore, to achieve the objectives of the present invention, there is also provided a regeneration method for regenerating a particulate filter of a diesel engine installed in a vehicle. This method may be performed, for example, at an automobile dealer without requiring traveling of the vehicle. According to the method, at least one estimated value of an amount of accumulated particulate matter on the particulate filter is obtained before initiation of a forceful regeneration operation of the particulate filter. A maximum operating time period of the regeneration operation is set based on the at least one estimated value of the amount of accumulated particulate matter. The particulate filter is regenerated in the regeneration operation by performing post fuel injection in the diesel engine during each exhaust stroke of the diesel engine to supply fuel to the particulate filter and thereby to remove the particulate matter from the particulate filter through use of combustion heat of the supplied fuel upon combustion of the supplied fuel. Then, a remaining amount of accumulated particulate matter of the particulate filter and elapsed time, which has been measured since the initiation of the current regeneration operation, are monitored and the regeneration operation is stopped when one of the following conditions is satisfied: the remaining amount of accumulated particulate matter of the particulate filter is equal to or less than a reference value used to determine completion of regeneration of the particulate filter; and the elapsed time reaches an end of the maximum operating time period. The regeneration operation is forcefully stopped when the elapsed time reaches the end of the maximum operating time period regardless of the monitored remaining amount of accumulated particulate matter of the particulate filter.

The invention, together with additional objectives, features and advantages thereof, will be best understood from the following description, the appended claims and the accompanying drawings in which:
FIG. 1 is a diagram showing a structure of a diesel engine, to which a regeneration system for regenerating a particulate filter according to an embodiment of the present invention is applied;
FIG. 2 is a flow chart, which indicates a main routine of a forceful regeneration operation of the particulate filter by the regeneration system;
FIG. 3 is a flow chart showing an operation for computing an amount of accumulated particulate matter of the particulate filter and for computing a regeneration operating time period, which corresponds to the computed amount of accumulated particulate matter;
FIG. 4 is a flow chart showing an engine control operation during the forceful regeneration of the particulate filter; and
FIG. 5 is a sensor characteristic diagram showing characteristics of a differential pressure sensor of the regeneration system.

Regeneration system and method for regenerating a particulate filter according to an embodiment of the present invention will be described with reference to the accompanying drawings.

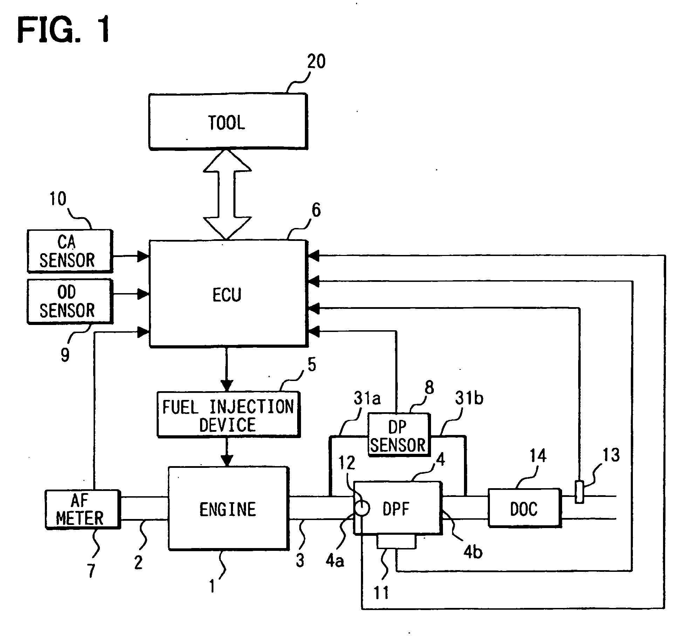

FIG. 1 shows a structure of a diesel engine, to which the regeneration system of the present embodiment is installed. In the diesel engine, an air intake passage 2 and an exhaust passage 3 are connected to an engine main body 1. The air intake passage 2 conducts intake air, and the exhaust passage 3 conducts exhaust gas (emissions) outputted from cylinders of the engine main body 1. Furthermore, a diesel particulate filter (DPF) 4 is positioned in the exhaust passage 3. The particulate filter 4 includes a porous ceramic body made of, for example, cordierite or silicon carbide. The exhaust gas enters the particulate filter 4 through an inlet 4a and passes through partition walls of the porous ceramic body. Thereafter, the exhaust gas exits the particulate filter 4 through an outlet 4b and flows toward a downstream side. At this time, fine exhaust particles (generally referred to as particulate matter) contained in the exhaust gas are captured by the particulate filter 4 and are increasingly accumulated in the particulate filter 4. An oxidation catalyst, which includes precious metal, such as platinum or palladium, as its major component, is held on a surface of a filter main body of the particulate filter 4 to oxidize, combust and remove the particulate matter under a predetermined temperature condition.

The diesel engine of the present embodiment includes a fuel supply device, i.e., a fuel injection device 5, which includes injectors for supplying fuel to the cylinders of the engine main body 1. Furthermore, an ECU 6 is provided. The ECU 6 controls, for example, the fuel supply amount and fuel injection timing of the fuel injection device 5. In addition to the control operation for controlling the operational state of the diesel engine, the ECU 6 performs a control operation for controlling the regeneration operation of the particulate filter 4, which will be described below. Thus, the ECU 6 plays the central role in the regeneration system for regenerating the particulate filter according to the present embodiment.

Various signals, which indicate the actual operational state of the diesel engine, are supplied to the ECU 6. The diesel engine is controlled based on these signals to achieve a desired operational state of the diesel engine.

First, the ECU 6 receives a measurement signal from a differential pressure sensor 8 as a value, which relates to the amount of accumulated particulate matter. The differential pressure sensor 8 senses a pressure difference between an upstream side of the particulate filter 4 and a downstream side of the particulate filter 4. First and second branched passages 31a, 31b are connected to the exhaust passage 3. The first branched passage 31a branches from the exhaust passage 3 on the upstream side of the particulate filter 4, and the second branched passage 31b branches from the exhaust passage 3 on the downstream side of the particulate filter 4. The differential pressure sensor 8 senses the pressure difference between the inlet (the upstream side) 4a of the particulate filter 4 and the outlet (the downstream side) 4b of the particulate filter 4. The pressure difference, which is sensed by the differential pressure sensor 8, correlates to the amount of accumulated particulate matter (hereinafter, referred to as the amount of accumulated PM) of the particulate filter 4. When the amount of accumulated PM increases to cause an increase in the pressure loss, the pressure difference is also increased.

Furthermore, a weight sensor 11 is arranged adjacent the particulate filter 4. The weight sensor 11 senses the weight of the particulate filter 4 as the value, which relates to the amount of accumulated PM. A measurement signal of the weight sensor 11 is also supplied to the ECU 6. It is not required to provide both the differential pressure sensor 8 and the weight sensor 11, and therefore only one of the differential pressure sensor 8 and the weight sensor 11 may be provided, if desired.

An air flow meter 7 is provided in the air intake passage 2 to sense the flow rate of the intake air (hereinafter, sometimes referred to as an intake air flow rate). A measurement signal of the air flow meter 7 is supplied to the ECU 6. Also, a measurement signal of an opening degree sensor (also referred to as an accelerator pedal position sensor) 9 and a measurement signal of a crank angle sensor 10 are supplied to the ECU 6. The opening degree sensor 9 senses a degree of opening of a throttle valve (not shown), which corresponds to a position of an accelerator pedal (not shown) that is operated by a driver. The crank angle sensor 10 senses a rotational speed (rpm) of the engine.

Furthermore, a diesel oxidation catalyst (DOC) 14 is provided on the downstream side of the particulate filter 4 in the exhaust passage 3. The DOC 14 removes harmful exhaust gas components other than the particulate matter. Furthermore, an oxygen sensor (O₂ sensor) 13 is provided on the downstream side of the oxidation catalyst 14 to monitor removal of the harmful components by the oxidation catalyst 14. The amount of remaining harmful components in the exhaust gas can be determined by measuring the amount of oxygen in the exhaust gas through the oxygen sensor 13. Alternatively, the amount of harmful components may be directly measured by a gas sensor (not shown).

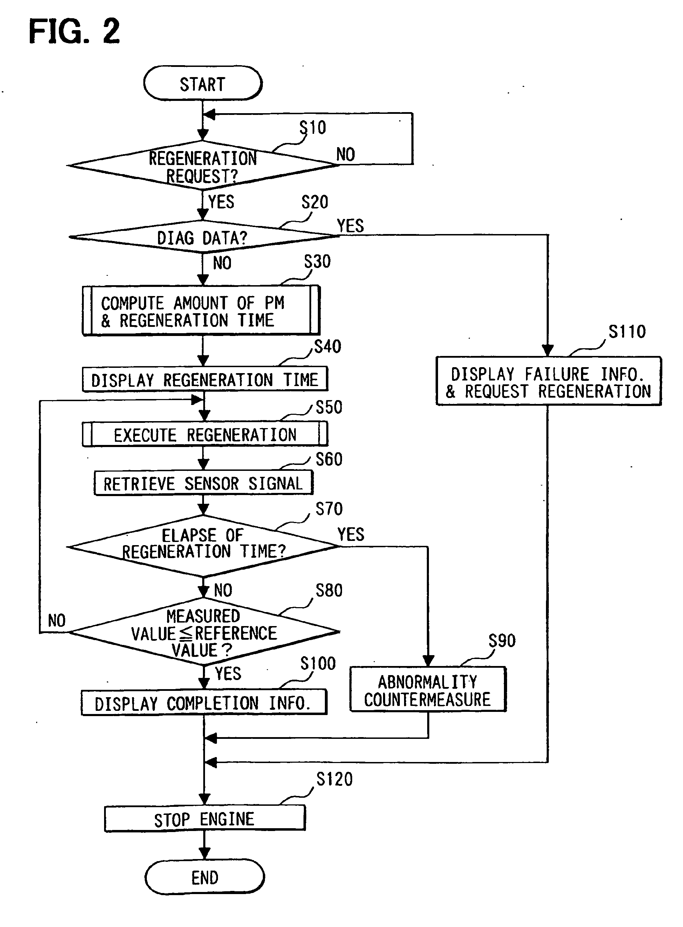

A tool (dealer tool) 20 is removably connected to the ECU 6 and commands the ECU 6 to perform the forceful regeneration operation of the particulate filter 4. Furthermore, the tool 20 indicates information about various states in the forceful regeneration operation of the particulate filter 4. The forceful regeneration operation of the particulate filter 4 through use of the tool 20 will be described in greater detail with reference to flow charts shown in FIGS. 2 to 4.

FIG. 2 shows the flow chart, which indicates a main routine of the forceful regeneration operation of the particulate filter 4. As shown in FIG. 2, first, at step S10, it is determined whether an execution command, which requests execution of the forceful regeneration operation of the particulate filter 4, has been outputted from the tool 20 to the ECU 6. When it is determined that the execution command is outputted from the tool 20 to the ECU 6, control proceeds to step S20.

At step S20, it is determined whether diagnosis data (sometimes referred to as diag data), which relates to the regeneration operation of the particulate filter 4, is stored, i.e., is present in the ECU 6. More specifically, the ECU 6 monitors the accumulation of the particulate matter in the particulate filter 4 and also monitors whether removal of the particulate matter from the particulate filter 4 can be properly performed during the running state of the diesel engine. When the ECU 6 detects a failure of any component of the regeneration system, the ECU 6 stores the diagnosis data, which includes failure information indicating the failed component and also a type of the failure.

For example, in a case where the differential pressure sensor 8 is failed, and thereby the amount of accumulated particulate matter cannot be correctly sensed, an execution time interval for executing the regeneration operation of the particulate filter 4 could be extremely shortened or lengthened. In such a case, the ECU 6 determines that a possibility of failure of the differential pressure sensor 8 is relatively high and stores the corresponding diagnosis data, which indicates the relatively high possibility of the failure of the differential pressure sensor 8.

When it is determined that the diagnosis data is stored in the ECU 6 at step S20, control proceeds to step S110 . At step S110, the tool 20 displays failure information, which indicates the failed component, and also displays a message for requesting repair or replacement of the failed component. Furthermore, the tool 20 displays a message for requesting input of a command for executing the forceful regeneration operation of the particulate filter 4 after the repair or the replacement of the failed component. Thereafter, the process ends. In a case where the one of the components of the regeneration system is failed, the regeneration operation may not be properly performed. Thus, in such a failed state, the regeneration operation is prohibited to limit waste of fuel.

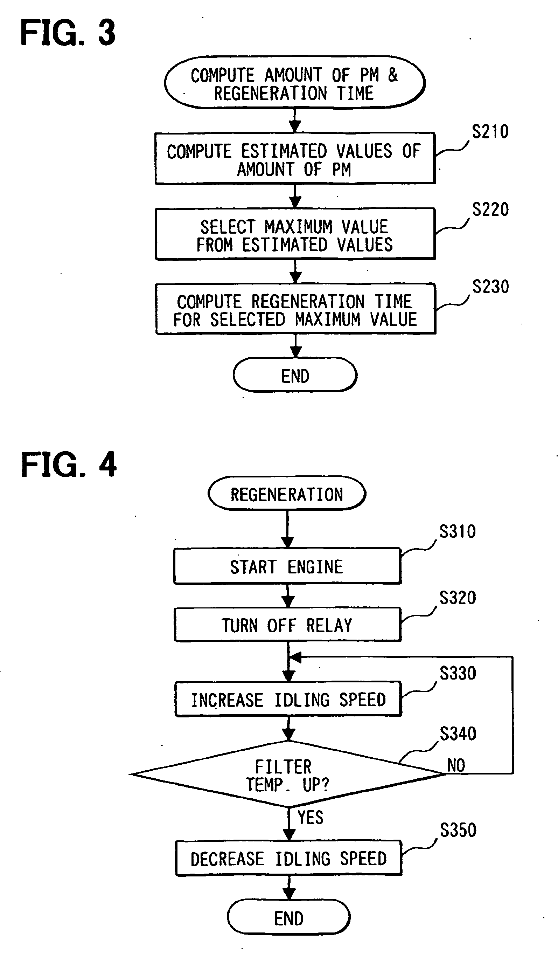

In contrast, when it is determined that the diagnosis data is not stored in the ECU 6 at step S20, control proceeds to step S30. At step S30, the amount of accumulated PM of the particulate filter 4 is computed. Then, the corresponding regeneration operating time period (or simply referred to as an operating time period or regeneration time), which corresponds to the computed amount of accumulated PM, is computed. This process will be described in greater detail with reference to FIG. 3.

First, at step S210 of the flow chart in FIG. 3, a plurality of methods is used to determine the amount of accumulated PM. Thus, a plurality of estimated values for the amount of accumulated PM is obtained. These methods will be described below.
(1) The diesel engine is started and is thus placed in the running state. Then, the amount of accumulated PM is estimated based on the pressure difference between the inlet 4a and the outlet 4b of the particulate filter 4 at the time of supplying the predetermined intake air flow.
(2) The weight of the particulate filter 4 is sensed through the weight sensor 11, and the amount of accumulated PM is estimated based on the sensed weight of the particulate filter 4. When the amount of accumulated PM is increased, the weight of the particulate filter 4 is accordingly increased. Based on a change in the weight of the particulate filter 4, the amount of accumulated PM can be estimated.
(3) An operating time period of the diesel engine between the end of the previous regeneration operation and the beginning of the current regeneration operation is measured every time the regeneration operation is performed. The amount of accumulated PM is estimated based on an average of the operating time period of the diesel engine between the two consecutive regeneration operations during the normal operation. In the normal operation, when the amount of accumulated PM reaches a regeneration reference value (a threshold value) for initiating the regeneration operation, the regeneration operation is executed. Thus, by storing the average of the operating time period of the diesel engine between the two consecutive regeneration operations, the amount of accumulated PM can be estimated based on a ratio of the current elapsed regeneration time, which has been measured since the end of the previous regeneration operation, relative to the average of the operating time period of the diesel engine between the two consecutive regeneration operations.
   Alternatively, the amount of accumulated PM per unit time during the normal operation may be computed. Then, the total amount of accumulated PM may be estimated by multiplying the amount of accumulated PM per unit time by the current elapsed regeneration time of the diesel engine.
(4) A travel distance of the vehicle having the diesel engine between the end of the previous regeneration operation and the beginning of the current regeneration operation is measured every time the regeneration operation is performed. The amount of accumulated PM is estimated based on an average of the travel distance of the vehicle between the two consecutive regeneration operations during the normal operation. That is, similar to the above case where the operating time period of the diesel engine is used to estimate the amount of accumulated PM, the amount of accumulated PM can be estimated based on a ratio of the current travel distance of the vehicle, which has been measured since the end of the previous regeneration operation, relative to the average of the travel distance of the vehicle.
(5) The total amount of injected fuel in the diesel engine between the end of the previous regeneration operation and the beginning of the current regeneration operation is measured every time the regeneration operation is performed. The amount of accumulated PM is estimated based on an average of the total amount of injected fuel between the two consecutive regeneration operations during the normal operation. That is, the average of the total amount of injected fuel, which is injected between the two consecutive regeneration operations, is stored. Then, the amount of accumulated PM can be estimated based on a ratio of the current cumulative amount of injected fuel, which has been injected since the end of the previous regeneration operation, relative to the average of the total amount of injected fuel.
(6) The diesel engine is started and is thus placed in the predetermined running state. Then, the amount of accumulated PM is estimated based on a gradient of a change in the pressure difference between the inlet 4a and the outlet 4b of the particulate filter 4 in the predetermined running state. That is, the gradient of the change in the pressure difference measured by the differential pressure sensor 8 is not always constant. More specifically, the gradient of the change in the pressure difference measured by the differential pressure sensor 8 changes quadratically according to the amount of accumulated PM. Thus, the amount of accumulated PM can be estimated based on the gradient of the change in the pressure difference.

Next, at step S220, the maximum value is selected from the estimated values of the amount of accumulated PM, which are computed at step S210. Then, at step S230, the corresponding regeneration operating time period is computed. The corresponding regeneration operating time period is the time period required to regenerate the particulate filter 4 by removing the corresponding amount of accumulated PM, which corresponds to the selected maximum value.

The reason for selecting the maximum value from the estimated values of the amount of accumulated PM at step S220 is to make sure that the particulate matter, which is accumulated in the particulate filter 4 is substantially removed. However, it should be noted that each of the estimated values of the amount of accumulated PM, which are computed by the above methods, may be erroneous for some reason. Thus, alternative to the use of the selected maximum value, the regeneration operating time period can be set based on a sum of a preset value and a weighted average of the amount of accumulated PM. Further alternatively, the regeneration operating time period can be set based on a maximum value that is selected from a group of the average values of the amount of accumulated PM, which fall in a predetermined range.

When the computation of the regeneration operating time period ends, the computed regeneration operating time period is displayed by the tool 20 at step S40 of the flow chart shown in FIG. 2. In this way, the operator of the forceful regeneration operation can know the operating time period, which is required to perform the forceful regeneration operation, in advance of the forceful regeneration operation.

At step S50, an engine control operation for the forceful regeneration is performed. The engine control operation for the forceful regeneration will be described in greater detail with reference to FIG. 4.

First, at step S310, the diesel engine is started. At this time, a multistage fuel injection operation, which is performed during the normal operation, is prohibited to reduce the fuel consumption in the forceful regeneration operation. That is, in each combustion stroke, only single fuel injection (main fuel injection) is performed.

Furthermore, in each exhaust stroke, post fuel injection for removing the particulate matter, which is accumulated in the particulate filter 4, is performed. The fuel is supplied to the particulate filter 4 by the post fuel injection. When the temperature of the particulate filter 4 is increased to a sufficient level by the exhaust gas, the fuel is heated and is thus combusted. In the regeneration operation, the temperature of the oxidation catalyst of the particulate filter 4 is increased by the combustion heat of the fuel, so that the accumulated particulate matter is combusted and is removed.

Next, at step S320, a relay, such as an air conditioner relay, is turned off. This is to prohibit correction of the fuel injection amount caused by turning on of the relay in the forceful regeneration operation. In other words, operation of the air conditioner or the like is not required during the forceful regeneration operation. Thus, each corresponding relay is forcefully turned off to prevent consumption of the excess fuel.

At step S330, the fuel injection amount is increased to increase an idling speed of the diesel engine from a normal idling speed to a predetermined idling speed (e.g., about 1500 rpm). As described above, in the particulate filter 4, the removal of the particulate matter is possible only when the fuel is heated by the exhaust gas to its ignition temperature. The increase in the temperature of the particulate filter 4 can be further enhanced or accelerated by increasing the idling speed of the diesel engine. In this way, the removal of the particulate matter, i.e., the regeneration of the particulate filter 4 can be accelerated by the combustion of the fuel supplied in the post fuel injection. As a result, the required total fuel injection amount, which is required in the entire regeneration operation, can be reduced.

At step S340, it is determined whether the temperature of the particulate filter 4 has been increased to the predetermined temperature, which causes the ignition and combustion of the fuel, based on the measurement signal of the temperature sensor 12. At this time, when it is determined that the temperature of the particulate filter 4 has not bee increased to the predetermined temperature, the increased idling speed of the diesel engine is maintained at step S340. In contrast, when it is determined that the temperature of the particulate filter 4 has been increased to the predetermined temperature, the idling speed of the diesel engine is decreased at step S350. Thus, the increased idling speed is maintained only for a certain time period (a predetermined time period).

The diesel engine needs to maintain the running state for performing the post fuel injection during the regeneration operation. However, after the particulate filter 4 is heated to the predetermined temperature, which is required for the regeneration operation, it is not required to maintain the high exhaust gas temperature, and it is only required to maintain the idling state of the diesel engine. Thus, the rotational speed of the diesel engine is controlled to the lowest possible level, i.e., is controlled to the minimum rotational speed (the minimum idling speed) that can maintain the idling state of the diesel engine. In this way, the fuel consumption for maintaining the running state of the diesel engine can be reduced.

During the engine control operation, which is performed in the forceful regeneration, the ECU 6 receives the measurement signals from the differential pressure sensor 8 and the weight sensor 11 at step S60. Then, at step S70, it is determined whether the computed regeneration operating time period, which is computed at step S30, has elapsed.

When the regeneration operating time period elapses before the amount of accumulated PM, which is sensed based on the measurement signal of the differential pressure sensor 8 and/or the measurement signal of the weight sensor 11, reaches the regeneration reference value, which indicates the completion of the regeneration of the particulate filter 4, it could be caused by an abnormality, such as the sensor failure. Thus, a countermeasure against the abnormality is taken at step S90 in such a manner that the tool 20 performs storing of failure information indicating the state of the abnormality and displays information indicating the occurrence of the abnormality.

According to the present embodiment, as discussed above, even when the correct amount of accumulated PM of the particulate filter 4 cannot be measured due to the occurrence of the abnormality, such as the failure of the differential pressure sensor 8, the amount of accumulated PM of the particulate filter 4 is estimated before the initiation of the regeneration operation. The maximum regeneration operating time period is determined based on the estimated amount of accumulated particulate matter and is set as the regeneration operating time period. Thus, when the elapsed time, which has been measured since the beginning of the regeneration operation, reaches the end of the preset regeneration operating time period, the regeneration operation can be forcefully terminated to avoid waste of the fuel.

In contrast, when it is determined that the preset regeneration operating time period has not elapsed at step S70, control proceeds to step S80. At step S80, it is determined whether the measured sensor value (the measured pressure difference) of the sensor 8 and/or the measured sensor value (measured weight) of the sensor 11 have been reduced to the regeneration reference value or below.

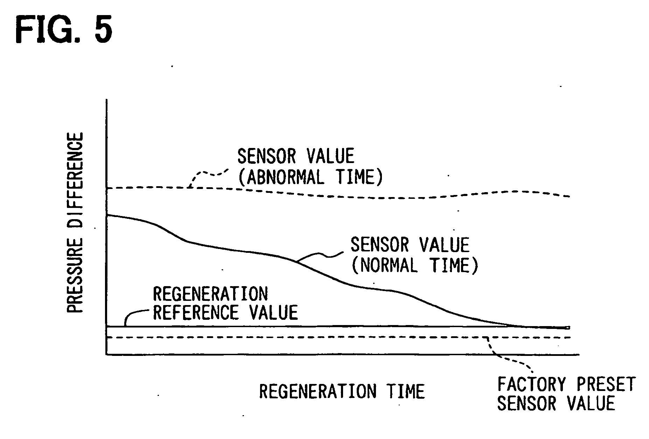

In the case of the differential pressure 8, as shown in the characteristic diagram of FIG. 5, when the sensor 8 is normal, the particulate matter is continuously removed by the forceful regeneration operation. Therefore, the sensor value (the measured pressure difference) of the sensor 8 is accordingly progressively reduced. When the sensor value is reduced and becomes equal to or less than the regeneration reference value, it is determined that the regeneration of the particulate filter 4 is completed. Here, the regeneration reference value is set based on a corresponding factory preset sensor value. The factory preset sensor value is set under a predetermined operational condition at the time of shipment from a manufacturing factory using a brand-new particulate filter that has no accumulated particulate matter. Therefore, the factory preset sensor value indicates the pressure difference between the inlet and the outlet of the particulate filter, which has no accumulated particulate matter. Alternatively, the regeneration reference value can be the factory preset sensor value itself. When the sensor is abnormal, the sensor value obtained based on the measurement signal of the sensor could be held to the high value, which is higher than the regeneration reference value, even after the substantial removal of the particulate matter from the particulate filter 4. In such a case, the countermeasure against the abnormality is taken upon determination of the elapse of the preset regeneration operating time period. Although the differential pressure sensor 8 is described in greater detail above, the sensor value of the weight sensor 11 may be processed in a manner similar to that of the differential pressure sensor 8. That is, when the sensor value of the weight sensor 11 is reduced and becomes equal to or less than the corresponding regeneration reference value, it is determined that the regeneration of the particulate filter 4 is completed. Like the differential pressure sensor 8, the regeneration reference value of the weight sensor 11 may be set based on a corresponding factory preset sensor value of the weight sensor 11 or may be the corresponding factory preset sensor value itself. The factor preset sensor value of the weight sensor 11 indicates the weight of the particulate filter 4 with no particulate matter.

When it is determined that the measured sensor value of the sensor 8 and/or the measured sensor value of the sensor 11 have been reduced to the regeneration reference value or below, control proceeds to step S100. At step S100, the tool 20 displays completion information indicating the completion of the regeneration operation. Thereafter, control proceeds to step S120 where the diesel engine is stopped, and the forceful regeneration operation is terminated.

The preferred embodiment of the present invention has been described. However, the regeneration system of the present invention is not limited to the above embodiment and can be embodied in other various forms.

For example, in the above embodiment, the multiple estimated values of the amount of accumulated PM are computed through the multiple methods. Alternatively, only one estimated value of the amount of accumulated PM, which is obtained by one of the above methods, can be used.

Additional advantages and modifications will readily occur to those skilled in the art. The invention in its broader terms is therefore limited to what is claimed, but not to specific details, representative apparatus, and illustrative examples shown and described.

## Claims

1. A regeneration system for performing a forceful regeneration operation of a particulate filter (4) of a diesel engine installed in a vehicle, the regeneration system comprising:
an estimating means (S30) for estimating an amount of accumulated particulate matter on the particulate filter (4) before initiation of the regeneration operation, wherein the estimating means (S30) provides at least one estimated value of the amount of accumulated particulate matter;
a setting means (S30) for setting a maximum operating time period of the regeneration operation based on the at least one estimated value of the amount of accumulated particulate matter;
a sensing means (S60) for sensing at least one physical quantity, which relates to the amount of accumulated particulate matter;
a regenerating means (S50) for regenerating the particulate filter (4) in the regeneration operation by performing post fuel injection in the diesel engine during each exhaust stroke of the diesel engine to supply fuel to the particulate filter (4) and thereby to remove the particulate matter from the particulate filter (4) through use of combustion heat of the supplied fuel upon combustion of the supplied fuel; and
a stop means (S70, S80, S120) for monitoring elapsed time, which has been measured since the initiation of the current regeneration operation of the regenerating means (S50),
**characterized in that**
the stop means (S70, S80, S120) monitors a remaining amount of accumulated particulate matter of the particulate filter (4), which is determined based on the at least one physical quantity sensed by the sensing means (S60), and stops the regeneration operation of the regenerating means (S50) when the monitored remaining amount of accumulated particulate matter of the particulate filter (4) is equal to or less than a reference value used to determine completion of regeneration of the particulate filter (4);
wherein the stop means (S70, S80, S120) forcefully stops the regeneration operation of the regenerating means (S50)when the elapsed time reaches the end of the maximum operating time period regardless of the monitored remaining amount of accumulated particulate matter of the particulate filter (4).

2. The regeneration system according to claim 1, further **characterized by**:
a failure diagnosing means (S20) for diagnosing a failure of at least one of the estimating means (S30), the setting means (S30), the sensing means (S60), the regenerating means (S50) and the stop means (S80, S100, S120); and
a storage means (6) for storing failure information when the failure of any one of the at least one of the estimating means (S30), the setting means (S30), the sensing means (S60), the regenerating means (S50) and the stop means (S80, S100, S120) is sensed by the failure diagnosing means (S20), wherein:
the failure information is indicative of the sensed failure; and
the stop means (S80, S100, S120) stops the regeneration operation of the regenerating means (S50) when the failure information is present in the storage means (6).

3. The regeneration system according to claim 1 or 2,
**characterized in that**:
the at least one estimated value of the amount of accumulated particulate matter, which is estimated by the estimating means (S30), includes a plurality of estimated values of the amount of accumulated particulate matter;
the estimating means (S30) estimates the plurality of estimated values of the amount of accumulated particulate matter through a plurality of methods, respectively;-and
the setting means (S30) sets the maximum operating time period of the regeneration operation based on the plurality of estimated values of the amount of accumulated particulate matter.

4. The regeneration system according to claim 3, **characterized in that** the setting means (S30) sets the maximum operating time period of the regeneration operation based on a maximum one of the plurality of estimated values of the amount of accumulated particulate matter.

5. The regeneration system according to claim 3 or 4, **characterized in that** the plurality of estimated values of the amount of accumulated particulate matter, which are estimated by the estimating means (S30), includes at least two of:
an estimated value of the amount of accumulated particulate matter that is estimated by the estimating means (S30) based on a pressure difference between an inlet (4a) of the particulate filter (4) and an outlet (4b) of the particulate filter (4);
an estimated value of the amount of accumulated particulate matter that is estimated by the estimating means (S30) based on a weight of the particulate filter (4);
an estimated value of the amount of accumulated particulate matter that is estimated by the estimating means (S30) based on elapsed operating time of the diesel engine, which has been measured since an end of a previous forceful regeneration operation of the particulate filter (4);
an estimated value of the amount of accumulated particulate matter that is estimated by the estimating means (S30) based on a travel distance of the vehicle, which has been measured since the end of the previous regeneration operation of the particulate filter (4); and
an estimated value of the amount of accumulated particulate matter that is estimated by the estimating means (S30) based on a total amount of injected fuel, which has been measured since the end of the previous regeneration operation of the particulate filter (4).

6. The regeneration system according to any one of claims 1 to 5, further **characterized by** a rotational speed control means (S50) for controlling a rotational speed of the diesel engine, wherein the rotational speed control means (S50) keeps the rotational speed of the diesel engine higher than a normal idling speed of the diesel engine throughout a predetermined time period, which starts at time of the initiation of the current regeneration operation.

7. The regeneration system according to claim 6, **characterized in that** the predetermined time period ends when combustion of the supplied fuel, which is supplied to the particulate filter (4), is confirmed.

8. The regeneration system according to claim 6 or 7, **characterized in that** the rotational speed control means (S50) reduces the rotational speed of the diesel engine to a minimum idling speed, which is required for maintaining the idling of the diesel engine, after elapse of the predetermined time period.

9. The regeneration system according to any one of claims 6 to 8, **characterized in that** the rotational speed control means (S50) controls the rotational speed of the diesel engine in such a manner that single fuel injection is performed in the diesel engine per combustion stroke of the diesel engine throughout the regeneration operation of the regenerating means (S50).

10. A regeneration method for regenerating a particulate filter (4) of a diesel engine installed in a vehicle, the regeneration method comprising:
obtaining at least one estimated value of an amount of accumulated particulate matter on the particulate filter (4) before initiation of a forceful regeneration operation of the particulate filter (4);
setting a maximum operating time period of the regeneration operation based on the at least one estimated value of the amount of accumulated particulate matter;
regenerating the particulate filter (4) in the regeneration operation by performing post fuel injection in the diesel engine during each exhaust stroke of the diesel engine to supply fuel to the particulate filter (4) and thereby to remove the particulate matter from the particulate filter (4) through use of combustion heat of the supplied fuel upon combustion of the supplied fuel;
monitoring elapsed time, which has been measured since the initiation of the current regeneration operation,
**characterized by**
monitoring a remaining amount of accumulated particulate matter of the particulate filter (4) and stopping the regeneration operation when the remaining amount of accumulated particulate matter of the particulate filter (4) is equal to or less than a reference value used to determine completion of regeneration of the particulate filter (4)
wherein the regeneration operation is forcefully stopped when the elapsed time reaches the end of the maximum operating time period regardless of the monitored remaining amount of accumulated particulate matter of the particulate filter (4).

11. The regeneration method according to claim 10, further **characterized by**:
diagnosing a failure of at least one component of a regeneration system; and
storing failure information in a storage means (6) when the failure is sensed in the diagnosing of the failure, wherein:
the failure information is indicative of the sensed
the stopping of the regeneration operation includes stopping the regeneration operation when the failure information is present in the storage means (6).

12. The regeneration method according to claim 10 or 11,
**characterized in that**:
the obtaining of the at least one estimated value of the amount of accumulated particulate matter includes obtaining a plurality of estimated values of the amount of accumulated particulate matter through a plurality of methods, respectively; and
the setting of the maximum operating time period includes setting the maximum operating time period based on the plurality of estimated values of the amount of accumulated particulate matter.

13. The regeneration method according to claim 12, **characterized in that** the setting of the maximum operating time period includes setting the maximum operating time period based on a maximum one of the plurality of estimated values of the amount of accumulated particulate matter.

14. The regeneration method according to claim 12 or 13, **characterized in that** the obtaining of the plurality of estimated values of the amount of accumulated particulate matter includes obtaining at least two of:
an estimated value of the amount of accumulated particulate matter that is estimated based on a pressure difference between an inlet (4a) of the particulate filter (4) and an outlet (4b) of the particulate filter (4);
an estimated value of the amount of accumulated particulate matter that is estimated based on a weight of the particulate filter (4);
an estimated value of the amount of accumulated particulate matter that is estimated based on elapsed operating time of the diesel engine, which has been measured since an end of a previous forceful regeneration operation of the particulate filter (4);
an estimated value of the amount of accumulated particulate matter that is estimated based on a travel distance of the vehicle, which has been measured since the end of the previous regeneration operation of the particulate filter (4); and
an estimated value of the amount of accumulated particulate matter that is estimated based on a total amount of injected fuel, which has been measured since the end of the previous regeneration operation of the particulate filter (4).

15. The regeneration method according to any one of claims 10 to 14, **characterized in that** the regenerating of the particulate filter (4) includes keeping a rotational speed of the diesel engine higher than a normal idling speed of the diesel engine throughout a predetermined time period, which starts at time of initiation of the current regeneration operation.

16. The regeneration method according to claim 15, **characterized in that** the predetermined time period ends when combustion of the supplied fuel, which is supplied to the particulate filter (4), is confirmed.

17. The regeneration method according to claim 16, **characterized in that** the regenerating of the particulate filter (4) includes reducing the rotational speed of the diesel engine to a minimum idling speed, which is required for maintaining the idling of the diesel engine, after elapse of the predetermined time period.

18. The regeneration method according to any one of claims 15 to 17, **characterized in that** the regenerating of the particulate filter (4) includes performing single fuel injection in the diesel engine per combustion stroke of the diesel engine through an entire period of the regenerating of the particulate filter (4).

## Patentansprüche

1. Regenerationssystem zum Durchführen eines erzwungenen Regenerationsbetriebs eines Partikelfilters (4) einer an einem Fahrzeug installierten Dieselkraftmaschine, wobei das Regenerationssystem folgendes aufweist:
eine Schätzeinrichtung (S30) zum Schätzen einer Menge von an dem Partikelfilter (4) vor der Initiierung des Regenerationsbetriebs angesammelten Schwebstoffen, wobei die Schätzeinrichtung (S30) zumindest einen geschätzten Wert der Menge der angesammelten Schwebstoffe bereitstellt;
eine Einstelleinrichtung (S30) zum Einstellen einer maximalen Betriebszeitspanne des Regenerationsbetriebs auf Grundlage des zumindest einen geschätzten Werts der Menge der angesammelten Schwebstoffe;
einer Erfassungseinrichtung (S60) zum Erfassen mindestens einer physikalischen Größe, die mit der Menge der angesammelten Schwebstoffe in Beziehung steht;
einer Regenerationseinrichtung (S50) zum Regenerieren des Partikelfilters (4) in dem Regenerationsbetrieb, indem während jedem Auslasstakt der Dieselkraftmaschine eine Kraftstoffnacheinspritzung in der Dieselkraftmaschine durchgeführt wird, um zu dem Partikelfilter (4) Kraftstoff zuzuführen und **dadurch** die Schwebstoffe von dem Partikelfilter (4) durch Verwendung der Verbrennungswärme des zugeführten Kraftstoffs nach der Verbrennung des zugeführten Kraftstoffs zu beseitigen; und
eine Stoppeinrichtung (S70, S80, S120) zum Überwachen der verstrichenen Zeit, die seit der Initiierung des gegenwärtigen Regenerationsbetriebs der Regenerationseinrichtung (S50) gemessen wurde,
**dadurch gekennzeichnet, dass**
die Stoppeinrichtung (S70, S80, S120) eine verbleibende Menge von angesammelten Schwebstoffen des Partikelfilters (4) überwacht, welche auf Grundlage der zumindest einen durch die Erfassungseinrichtung (S60) erfassten physikalischen Größe bestimmt wird, und den Regenerationsbetrieb der Regenerationseinrichtung (S50) stoppt, wenn die überwachte verbleibende Menge von angesammelten Schwebstoffen des Partikelfilters (4) gleich wie oder kleiner als ein Bezugswert ist, der zum Bestimmen der Vollendung der Regeneration des Partikelfilters (4) verwendet wird,
wobei die Stoppeinrichtung (S70, S80, S120) den Regenerationsbetrieb der Regenerationseinrichtung (S50) zwingend stoppt, wenn die verstrichene Zeit ungeachtet der überwachten verbleibenden Menge von angesammelten Schwebstoffen des Partikelfilters (4) das Ende der maximalen Betriebszeitspanne erreicht.

2. Regenerationssystem gemäß Anspruch 1, ferner **gekennzeichnet durch**:
eine Fehlerdiagnoseeinrichtung (S20) zum Diagnostizieren eines Fehlers von zumindest einer von der Schätzeinrichtung (S30), der Einstelleinrichtung (S30), der Erfassungseinrichtung (S60), der Regenerationseinrichtung (S50) und der Stoppeinrichtung (S80, S100, S120); und
eine Speichereinrichtung (6) zum Speichern der Fehlerinformation, wenn der Fehler von irgendeiner der zumindest einen von der Schätzeinrichtung (S30), der Einstelleinrichtung (S30), der Erfassungseinrichtung (S60), der Regenerationseinrichtung (S50) und der Stoppeinrichtung (S80, S100, S120) **durch** die Fehlerdiagnoseeinrichtung (S20) erfasst wurde, wobei
die Fehlerinformation für den erfassten Fehler anzeigend ist; und
die Stoppeinrichtung (S80, S100, S120) den Regenerationsbetrieb der Regenerationseinrichtung (S50) stoppt, wenn die Fehlerinformation in der Speichereinrichtung (6) vorhanden ist.

3. Regenerationssystem gemäß Anspruch 1 oder 2,
**dadurch gekennzeichnet, dass**
der zumindest eine geschätzte Wert der Menge der angesammelten Schwebstoffe, der durch die Schätzeinrichtung (S30) geschätzt wird, eine Vielzahl von geschätzten Werten der Menge der angesammelten Schwebstoffe aufweist,
die Schätzeinrichtung (S30) die Vielzahl von geschätzten Werten der Menge der angesammelten Schwebstoffe durch eine Vielzahl von jeweiligen Verfahren abschätzt; und
die Einstelleinrichtung (S30) die maximale Betriebszeitspanne des Regenerationsbetriebs auf Grundlage der Vielzahl von geschätzten Werten der Menge angesammelter Schwebstoffe einstellt.

4. Regenerationssystem gemäß Anspruch 3,
**dadurch gekennzeichnet, dass**
die Einstelleinrichtung (S30) die maximale Betriebszeitspanne des Regenerationsbetriebs auf Grundlage eines maximalen Werts der Vielzahl von geschätzten Werten der Menge der angesammelten Schwebstoffe einstellt.

5. Regenerationssystem gemäß Anspruch 3 oder 4,
**dadurch gekennzeichnet, dass**
die Vielzahl von geschätzten Werten der Menge der angesammelten Schwebstoffe, die durch die Schätzeinrichtung (S30) geschätzt werden, zumindest zwei der folgenden aufweisen:
einen Schätzwert der Menge der angesammelten Schwebstoffe, der durch die Schätzeinrichtung (S30) auf Grundlage eines Druckunterschieds zwischen einem Einlass (4a) des Partikelfilters (4) und einem Auslass (4b) des Partikelfilters (4) geschätzt wird;
einen Schätzwert der Menge von angesammelten Schwebstoffen, der durch die Schätzeinrichtung (S30) auf Grundlage eines Gewichts des Partikelfilters (4) geschätzt wird;
einen Schätzwert der Menge von angesammelten Schwebstoffen, der durch die Schätzeinrichtung (S30) auf Grundlage der verstrichenen Betriebszeit der Dieselkraftmaschine geschätzt wird, die seit einem Ende eines vorangegangenen erzwungenen Regenerationsbetriebs des Partikelfilters (4) gemessen wurde;
einen Schätzwert der Menge von angesammelten Schwebstoffen, der durch die Schätzeinrichtung (S30) auf Grundlage der Fahrstrecke des Fahrzeugs geschätzt wird, die seit dem Ende des vorangegangenen Regenerationsbetriebs des Partikelfilters (4) gemessen wurde; und
einen Schätzwert der Menge von angesammelten Schwebstoffen, der durch die Schätzeinrichtung (S30) auf Grundlage einer Gesamtmenge von eingespritztem Kraftstoff geschätzt wird, die seit dem Ende des vorangegangenen Regenerationsbetriebs des Partikelfilters (4) gemessen wurde.

6. Regenerationssystem gemäß einem der Ansprüche 1 bis 5, ferner **gekennzeichnet durch** eine Drehzahlsteuereinrichtung (S50) zum Steuern einer Drehzahl der Dieselkraftmaschine, wobei die Drehzahlsteuereinrichtung (S50) die Drehzahl der Dieselkraftmaschine über eine zum Zeitpunkt der Initiierung des gegenwärtigen Regenerationsbetriebs startende vorbestimmte Zeitspanne höher als eine normale Leerlaufdrehzahl der Dieselkraftmaschine hält.

7. Regenerationssystem gemäß Anspruch 6,
**dadurch gekennzeichnet, dass**
die vorbestimmte Zeitspanne endet, wenn die Verbrennung des zugeführten Kraftstoffs, der zu dem Partikelfilter (4) zugeführt wurde, bestätigt ist.

8. Regenerationssystem gemäß einem der Ansprüche 6 oder 7, **dadurch gekennzeichnet, dass**
die Drehzahlsteuereinrichtung (S50) die Drehzahl der Dieselkraftmaschine nach dem Verstreichen der vorbestimmten Zeitspanne auf eine minimale Leerlaufdrehzahl reduziert, die zum Beibehalten des Leerlaufs der Dieselkraftmaschine erforderlich ist.

9. Regenerationssystem gemäß einem der Ansprüche 6 bis 8, **dadurch gekennzeichnet, dass**
die Drehzahlsteuereinrichtung (S50) die Drehzahl der Dieselkraftmaschine in einer solchen Weise steuert, dass über den Regenerationsbetrieb der Regenerationseinrichtung (S50) hinweg die einzelne Kraftstoffeinspritzung in der Dieselkraftmaschine pro Verbrennungstakt der Dieselkraftmaschine durchgeführt wird.

10. Regenerationsverfahren zum Regenerieren eines Partikelfilters (4) einer in einem Fahrzeug installierten Dieselkraftmaschine, wobei das Regenerationsverfahren folgendes aufweist:
Erhalten zumindest eines geschätzten Werts einer Menge von vor der Initiierung eines erzwungenen Regenerationsbetriebs des Partikelfilters (4) an dem Partikelfilter (4) angesammelten Schwebstoffen;
Einstellen einer maximalen Betriebszeitspanne des Regenerationsbetriebs auf Grundlage von zumindest einem geschätzten Wert der Menge von angesammelten Schwebstoffen;
Regenerieren des Partikelfilters (4) in dem Regenerationsbetrieb durch Durchführen einer Kraftstoffnacheinspritzung in der Dieselkraftmaschine während jedem Auslasstakt der Dieselkraftmaschine, um zu dem Partikelfilter (4) Kraftstoff zuzuführen und **dadurch** durch Verwendung der Verbrennungswärme des zugeführten Kraftstoffs nach Verbrennung des zugeführten Kraftstoffs die Schwebstoffe von dem Partikelfilter (4) zu beseitigen;
Überwachen der verstrichenen Zeit, die seit der Initiierung des gegenwärtigen Regenerationsbetriebs gemessen wird; **gekennzeichnet durch**
Überwachen einer verbleibenden Menge von angesammelten Schwebstoffen des Partikelfilters (4) und Stoppen des Regenerationsbetriebs, wenn die verbleibende Menge von angesammelten Schwebstoffen des Partikelfilters (4) gleich wie oder kleiner als ein Referenzwert ist, der zum Bestimmen der Vollendung der Regeneration des Partikelfilters (4) verwendet wird,
wobei der Regenerationsbetrieb zwangsgestoppt wird, wenn die verstrichene Zeit ungeachtet der überwachten verbleibenden Menge von angesammelten Schwebstoffen des Partikelfilters (4) das Ende der maximalen Betriebszeitspanne erreicht.

11. Regenerationsverfahren gemäß Anspruch 10, ferner **gekennzeichnet durch**
Diagnostizieren eines Fehlers von zumindest einer Komponente eines Regenerationssystems; und
Speichern einer Fehlerinformation in einer Speichereinrichtung (6), wenn der Fehler in der Fehlerdiagnose erfasst wurde, wobei
die Fehlerinformation für den erfassten Fehler anzeigend ist, und
das Stoppen des Regenerationsbetriebs das Stoppen des Regenerationsbetriebs beinhaltet, wenn die Fehlerinformation in der Speichereinrichtung (6) vorhanden ist.

12. Regenerationsverfahren gemäß Anspruch 10 oder 11, **dadurch gekennzeichnet, dass**
das Erhalten des zumindest einen geschätzten Werts der Menge der angesammelten Schwebstoffe das Erhalten einer Vielzahl von geschätzten Werten der Menge der angesammelten Schwebstoffe durch eine Vielzahl von jeweiligen Verfahren aufweist, und
das Einstellen der maximalen Betriebszeitspanne das Einstellen der maximalen Betriebszeitspanne auf Grundlage der Vielzahl der geschätzten Werte der angesammelten Schwebstoffe aufweist.

13. Regenerationsverfahren gemäß Anspruch 12,
**dadurch gekennzeichnet, dass**
das Einstellen der maximalen Betriebszeitspanne das Einstellen der maximalen Betriebszeitspanne auf Grundlage eines maximalen Werts der Vielzahl von geschätzten Werten der Menge der angesammelten Schwebstoffe beinhaltet.

14. Regenerationsverfahren gemäß Anspruch 12 oder 13, **dadurch gekennzeichnet, dass**
das Erhalten der Vielzahl von geschätzten Werten der Menge der angesammelten Schwebstoffe das Erhalten von zumindest zwei der folgenden aufweist:
einen geschätzten Wert der Menge der angesammelten Schwebstoffen, der auf Grundlage eines Druckunterschieds zwischen einem Einlass (4a) des Partikelfilters (4) und einem Auslass (4b) des Partikelfilters (4) geschätzt wird;
einen geschätzten Wert der Menge von angesammelten Schwebstoffen, der auf Grundlage eines Gewichts des Partikelfilters (4) geschätzt wird;
einen geschätzten Wert der Menge von angesammelten Schwebstoffen, der auf Grundlage einer verstrichenen Betriebszeit der Dieselkraftmaschine geschätzt wird, die seit einem Ende eines vorangehenden erzwungenen Regenerationsbetriebs des Partikelfilters (4) gemessen wurde; und
einen geschätzten Wert der Menge von angesammelten Schwebstoffen, der auf Grundlage einer Fahrstrecke des Fahrzeugs geschätzt wird, die seit dem Ende des vorangegangenen Regenerationsbetriebs des Partikelfilters (4) gemessen wurde; und
einen geschätzten Wert der Menge von angesammelten Schwebstoffen, der auf Grundlage einer Gesamtmenge von eingespritztem Kraftstoff geschätzt wird, die seit dem Ende des vorangehenden Regenerationsbetriebs des Partikelfilters (4) gemessen wurde.

15. Verfahren gemäß einem der Ansprüche 10 bis 14,
**dadurch gekennzeichnet, dass**
die Regeneration des Partikelfilters (4) das Beibehalten einer Drehzahl der Dieselkraftmaschine bei einem höheren Wert als einer normalen Leerlaufdrehzahl der Kraftmaschine über eine vorbestimmte Zeitspanne hinweg beinhaltet, die zu einer Zeit der Initiierung des gegenwärtigen Regenerationsbetriebs startet.

16. Regenerationsverfahren gemäß Anspruch 15,
**dadurch gekennzeichnet, dass**
die vorbestimmte Zeitspanne endet, wenn die Verbrennung des zugeführten Kraftstoffs, der zu dem Partikelfilter (4) zugeführt wird, bestätigt ist.

17. Regenerationsverfahren gemäß Anspruch 16,
**dadurch gekennzeichnet, dass**
die Regeneration des Partikelfilters (4) das Korrigieren der Drehzahl der Dieselkraftmaschine nach dem Verstreichen der vorbestimmten Zeitspanne auf eine zum Beibehalten des Leerlaufs der Dieselkraftmaschine erforderliche minimale Leerlaufdrehzahl beinhaltet.

18. Regenerationsverfahren gemäß einem der Ansprüche 15 bis 17, **dadurch gekennzeichnet, dass**
die Regeneration des Partikelfilters (4) das Durchführen einer einzigen Kraftstoffeinspritzung in die Dieselkraftmaschine pro Verbrennungstakt der Dieselkraftmaschine über eine Gesamtzeitspanne der Regeneration des Partikelfilters (4) hinweg aufweist.

## Revendications

1. Un système de régénération pour effectuer une opération de régénération forcée d'un filtre à particules (4) d'un moteur diesel installé dans un véhicule, le système de régénération comprenant :
un moyen d'estimation (S30) pour estimer une quantité de matière particulaire accumulée sur le filtre à particules (4) avant le commencement de l'opération de régénération, le moyen d'estimation (S30) fournissant au moins une valeur estimée de la quantité de matière particulaire accumulée;
un moyen de réglage (S30) pour régler une durée de fonctionnement maximale de l'opération de régénération sur la base de l'au moins une valeur estimée de la quantité de matière particulaire accumulée;
un moyen de détection (S60) pour détecter au moins une grandeur physique, qui a une relation avec la quantité de matière particulaire accumulée;
un moyen de régénération (S50) pour régénérer le filtre à particules (4) dans l'opération de régénération, en effectuant une post-injection de carburant dans le moteur diesel au cours de chaque temps d'échappement du moteur diesel, pour fournir du carburant au filtre à particules (4), et éliminer ainsi la matière particulaire du filtre à particules (4) par l'utilisation de la chaleur de combustion du carburant fourni, sous l'effet de la combustion du carburant fourni; et
un moyen d'arrêt (S70, S80, S120) pour contrôler le temps écoulé, qui a été mesuré depuis le début de l'opération de régénération en cours du moyen de régénération (S50),
**caractérisé en ce que**
le moyen d'arrêt (S70, S80, S120) contrôle une quantité restante de matière particulaire accumulée du filtre à particules (4), qui est déterminée sur la base de l'au moins une grandeur physique détectée par le moyen de détection (S60), et arrête l'opération de régénération du moyen de régénération (S50) lorsque la quantité restante contrôlée de matière particulaire accumulée du filtre à particules (4) est égale ou inférieure à une valeur de référence utilisée pour déterminer l'achèvement de la régénération du filtre à particules (4),
dans lequel le moyen d'arrêt (S70, S80, S120) arrête de manière forcée l'opération de régénération du moyen de régénération (S50) lorsque le temps écoulé atteint la fin de la durée de fonctionnement maximale, indépendamment de la quantité restante contrôlée de la matière particulaire accumulée du filtre à particules (4).

2. Le système de régénération selon la revendication 1, **caractérisé en outre par** :
un moyen de diagnostic de défaillance (S20) pour diagnostiquer une défaillance d'au moins un du moyen d'estimation (S30), du moyen de réglage (S30), du moyen de détection (S60), du moyen de régénération (S50), et du moyen d'arrêt (S80, S100, S120); et
un moyen de stockage (6) pour stocker une information de défaillance lorsque la défaillance de l'un quelconque de l'au moins un du moyen d'estimation (S30), du moyen de réglage (S30), du moyen de détection (S60), du moyen de régénération (S50) et du moyen d'arrêt (S80, S100, S120) est détectée par le moyen de diagnostic de défaillance (S20), dans lequel :
l'information de défaillance indique la défaillance détectée; et
le moyen d'arrêt (S80, S100, S120) arrête l'opération de régénération du moyen de régénération (S50) lorsque l'information de défaillance est présente dans le moyen de stockage (6).

3. Le système de régénération selon la revendication 1 ou 2,
**caractérisé en ce que** :
l'au moins une valeur estimée de la quantité de matière particulaire accumulée, qui est estimée par le moyen d'estimation (S30), comprend une multiplicité de valeurs estimées de la quantité de matière particulaire accumulée;
le moyen d'estimation (S30) estime la multiplicité de valeurs estimées de la quantité de matière particulaire accumulée en employant respectivement une multiplicité de procédés; et
le moyen de réglage (S30) règle la durée de fonctionnement maximale de l'opération de régénération sur la base de la multiplicité de valeurs estimées de la quantité de matière particulaire accumulée.

4. Le système de régénération selon la revendication 3, **caractérisé en ce que** le moyen de réglage (S30) règle la durée de fonctionnement maximale de l'opération de régénération sur la base d'une valeur maximale de la multiplicité de valeurs estimées de la quantité de matière particulaire accumulée.

5. Le système de régénération selon la revendication 3 ou 4, **caractérisé en ce que** la multiplicité de valeurs estimées de la quantité de matière particulaire accumulée, qui sont estimées par le moyen d'estimation (S30), comprend au moins deux des suivantes :
une valeur estimée de la quantité de matière particulaire accumulée qui est estimée par le moyen d'estimation (S30) sur la base d'une différence de pression entre une entrée (4a) du filtre à particules (4) et une sortie (4b) du filtre à particules (4);
une valeur estimée de la quantité de matière particulaire accumulée qui est estimée par le moyen d'estimation (S30) sur la base d'un poids du filtre à particules (4);
une valeur estimée de la quantité de matière particulaire accumulée qui est estimée par le moyen d'estimation (S30) sur la base du temps de fonctionnement écoulé du moteur diesel, qui a été mesuré depuis une fin d'une opération de régénération forcée précédente du filtre à particules (4);
une valeur estimée de la quantité de matière particulaire accumulée qui est estimée par le moyen d'estimation (S30) sur la base d'une distance parcourue par le véhicule, qui a été mesurée depuis la fin de l'opération de régénération précédente du filtre à particules (4); et
une valeur estimée de la quantité de matière particulaire accumulée qui est estimée par le moyen d'estimation (S30) sur la base d'une quantité totale de carburant injecté, qui a été mesurée depuis la fin de l'opération de régénération précédente du filtre à particules (4).

6. Le système de régénération selon l'une quelconque des revendications 1 à 5, **caractérisé en outre par** un moyen de commande de vitesse de rotation (S50) pour commander une vitesse de rotation du moteur diesel, dans lequel le moyen de commande de vitesse de rotation (S50) maintient la vitesse de rotation du moteur diesel au-dessus d'une vitesse de ralenti normale du moteur diesel pendant un intervalle de temps prédéterminé, qui commence à l'instant du début de l'opération de régénération en cours.

7. Le système de régénération selon la revendication 6, **caractérisé en ce que** l'intervalle de temps prédéterminé se termine lorsque la combustion du carburant fourni, qui est fourni au filtre à particules (4), est confirmée.

8. Le système de régénération selon la revendication 6 ou 7, **caractérisé en ce que** le moyen de commande de vitesse de rotation (S50) réduit la vitesse de rotation du moteur diesel à une vitesse de ralenti minimale, qui est exigée pour maintenir le ralenti du moteur diesel, après l'écoulement de l'intervalle de temps prédéterminé.

9. Le système de régénération selon l'une quelconque des revendications 6 à 8, **caractérisé en ce que** le moyen de commande de vitesse de rotation (S50) commande la vitesse de rotation du moteur diesel d'une manière telle qu'une seule injection de carburant soit effectuée dans le moteur diesel pour chaque temps de combustion du moteur diesel, pendant l'ensemble de l'opération de régénération du moyen de régénération (S50).

10. Un procédé de régénération pour régénérer un filtre à particules (4) d'un moteur diesel installé dans un véhicule, le procédé de régénération comprenant les étapes consistant à :
obtenir au moins une valeur estimée d'une quantité de matière particulaire accumulée sur le filtre à particules (4) avant le commencement d'une opération de régénération forcée du filtre à particules (4);
régler une durée de fonctionnement maximale de l'opération de régénération sur la base de l'au moins une valeur estimée de la quantité de matière particulaire accumulée;
régénérer le filtre à particules (4) dans l'opération de régénération en effectuant une post-injection de carburant dans le moteur diesel au cours de chaque temps d'échappement du moteur diesel, pour fournir du carburant au filtre à particules (4) et éliminer ainsi la matière particulaire dans le filtre à particules (4) par l'utilisation de la chaleur de combustion du carburant fourni, sous l'effet de la combustion du carburant fourni;
contrôler le temps écoulé, qui a été mesuré depuis le début de l'opération de régénération en cours,
**caractérisé par** l'étape consistant à :
contrôler une quantité restante de matière particulaire accumulée du filtre à particules (4) et arrêter l'opération de régénération lorsque la quantité restante de matière particulaire accumulée du filtre à particules (4) est égale ou inférieure à une valeur de référence utilisée pour déterminer l'achèvement de la régénération du filtre à particules (4),
l'opération de régénération étant arrêtée de manière forcée lorsque le temps écoulé atteint la fin de la durée de fonctionnement maximale, indépendamment de la quantité restante contrôlée de matière particulaire accumulée du filtre à particules (4).

11. Le procédé de régénération selon la revendication 10, **caractérisé en outre par** les étapes consistant à :
diagnostiquer une défaillance d'au moins un composant d'un système de régénération; et
stocker une information de défaillance dans un moyen de stockage (6) lorsque la défaillance est détectée dans le diagnostic de la défaillance, dans lequel :
l'information de défaillance indique la défaillance détectée; et
l'arrêt de l'opération de régénération comprend l'arrêt de l'opération de régénération lorsque l'information de défaillance est présente dans le moyen de stockage (6).

12. Le procédé de régénération selon la revendication 10 ou 11, **caractérisé en ce que** :
l'obtention de l'au moins une valeur estimée de la quantité de matière particulaire accumulée comprend l'obtention d'une multiplicité de valeurs estimées de la quantité de matière particulaire accumulée, en employant respectivement une multiplicité de procédés; et
le réglage de la durée de fonctionnement maximale comprend le réglage de la durée de fonctionnement maximale sur la base de la multiplicité de valeurs estimées de la quantité de matière particulaire accumulée.

13. Le procédé de régénération selon la revendication 12, **caractérisé en ce que** le réglage de la durée de fonctionnement maximale comprend le réglage de la durée de fonctionnement maximale sur la base d'une valeur maximale parmi la multiplicité de valeurs estimées de la quantité de matière particulaire accumulée.

14. Le procédé de régénération selon la revendication 12 ou 13, **caractérisé en ce que** l'obtention de la multiplicité de valeurs estimées de la quantité de matière particulaire accumulée comprend l'obtention d'au moins deux des suivantes :
une valeur estimée de la quantité de matière particulaire accumulée qui est estimée sur la base d'une différence de pression entre une entrée (4a) du filtre à particules (4) et une sortie (4b) du filtre à particules (4);
une valeur estimée de la quantité de matière particulaire accumulée qui est estimée sur la base d'un poids du filtre à particules (4);
une valeur estimée de la quantité de matière particulaire accumulée qui est estimée sur la base du temps de fonctionnement écoulé du moteur diesel, qui a été mesuré depuis une fin d'une opération de régénération forcée précédente du filtre à particules (4);
une valeur estimée de la quantité de matière particulaire accumulée qui est estimée sur la base d'une distance parcourue par le véhicule, qui a été mesurée depuis la fin de l'opération de régénération précédente du filtre à particules (4); et
une valeur estimée de la quantité de matière particulaire accumulée qui est estimée sur la base d'une quantité totale de carburant injecté, qui a été mesurée depuis la fin de l'opération de régénération précédente du filtre à particules (4).

15. Le procédé de régénération selon l'une quelconque des revendications 10 à 14, **caractérisé en ce que** la régénération du filtre à particules (4) comprend le maintien d'une vitesse de rotation du moteur diesel à un niveau supérieur à une vitesse de ralenti normale du moteur diesel pendant un intervalle de temps prédéterminé, qui commence à l'instant du début de l'opération de régénération en cours.

16. Le procédé de régénération selon la revendication 15, **caractérisé en ce que** l'intervalle de temps prédéterminé se termine lorsque la combustion du carburant fourni, qui est fourni au filtre à particules (4), est confirmée.

17. Le procédé de régénération selon la revendication 16, **caractérisé en ce que** la régénération du filtre à particules (4) comprend la réduction de la vitesse de rotation du moteur diesel jusqu'à une vitesse de ralenti minimale, qui est exigée pour maintenir le ralenti du moteur diesel, après l'écoulement de l'intervalle de temps prédéterminé.

18. Le procédé de régénération selon l'une quelconque des revendications 15 à 17, **caractérisé en ce que** la régénération du filtre à particules (4) comprend l'accomplissement d'une seule injection de carburant dans le moteur diesel pour chaque temps de combustion du moteur diesel, au cours d'une durée entière de la régénération du filtre à particules (4).
